# EUROPEAN PATENT SPECIFICATION

(11) **EP 1 617 226 B1**
(45) Date of publication and mention of the grant of the patent: **18.04.2012**
(21) Application number: 05076185.7
(22) Date of filing: 20.05.2005
(51) Int. Cl.: G01P 5/07, G01W 1/02, E06B 9/56, G01W 1/12, G01W 1/14

(54) **Integrated system for the control of protection devices against environmental influences**
Intergiertes System zur Steuerung von Schutzvorrichtungen gegen Umwelteinflüsse
Système intégré pour le contrôle de dispositifs de protection contre des influences de l'environnement

(30) Priority: 14.07.2004 IT VE20040032
(43) Date of publication of application: 18.01.2006
(73) Proprietor: Master S.p.A., 30030 Martellago (VE) (IT)
(72) Inventor: De Pazzi, Renato, 35010 S. Pietro in Gu Padova (IT); Guzzo, Damiano, 30030 Oriago Venezia (IT)
(74) Representative: Modiano, Micaela Nadia

(56) References cited:
- EP-A- 1 314 849
- EP-A1- 1 077 378
- JP-A- 8 125 894
- NL-A- 9 400 103

## Description

The present invention regards an apparatus for controlling environment protection devices.

Devices are well known that can be defined generically as environment protection devices, in particular those comprising sunshades, roller shutters and similar for performing the function of protecting a certain site. Currently, protection devices worked by electric motors are increasingly being developed, which, besides mechanizing their movement, also allows it to be automated, in the sense that they make it possible for the movement to be carried out even without direct manual operation, that is, in the absence of the user.

However, the absence of the user can mean serious risks for the device and for the site that it is protecting, in the event of sudden changes in environmental conditions. Consider, for example, an open sunshade that in the event of a sudden gust of wind could run the risk of being torn.

In these cases and in other similar cases, it is therefore necessary that, in the absence of the user, when conditions occur that in the user's presence would have required him/her to operate the protection device, this can be operated automatically.

Since, in general, the environmental conditions subject to changes that entail this automatic operation regard wind or rain, multiple sensors comprising a wind gauge, a lux meter and a pluviometer have already been proposed.

The wind gauge generally comprises an impeller connected to an electrical generator able to generate a signal indicating characteristics related to the rotation speed of the impeller caused by the wind, for the purpose of operating the folding of the sunshade when the pre-set wind strength is exceeded.

The lux meter generally comprises a photodiode able to generate a signal indicating characteristics related to the brightness of the area surrounding the photodiode, for the purpose of operating the opening of the sunshade.

The pluviometer generally comprises a slightly inclined surface that is sensitive to the presence of water, and is able to generate a signal if water happens to cover the said surface by more than a pre-set percentage, for the purpose of operating the closing of a roller shutter.

These sensors are connected to a control card that processes the signals and, according to the settings carried out directly on the sensors or on the control card, operates the movements of the sunshade.

Generally to carry out these operations there are buttons or transmitters whose purpose is to operate the sunshade independently of the status of the sensors.

In its simplest form, therefore, the apparatus comprises a weather sensor, connected to a control card outside the weather sensor, and this control card is, in its turn, connected to a motor.

These well known apparatuses, however, have the drawback of a certain difficulty in carrying out the connections between weather sensor and control card, and between control card and motor.

Another drawback is the fact that they require a certain time for installation and setting up, the cost of which considerably increases the total cost of installation of the sunshade, since the weather sensor and the control card have to be installed in a special seat and these two have to be connected together with a first cable and then the motor has to be connected to the control card with a second cable.

Another drawback is the fact that the box containing the control card must be drilled to allow the connection between the weather sensor and the control card and between the control card and the motor; this operation greatly limits the ability of the box to keep its characteristics of "watertight box", which is indispensable when the control card is installed outside the building, as it is in almost all cases.

Another drawback is the fact that the regulators of the weather sensors are often located inside the control card; the modification of the intervention threshold therefore requires the box to be opened, an operation that is usually entrusted to a skilled technician.

Also well known are apparatuses in which the control card is incorporated inside the motor. This type of apparatus comprises a motor with a control card incorporated in the motor and at least one weather sensor, all connected by a cable or wireless.

These apparatuses, however, require special motors that are able to interpret the information coming from the weather sensors.

A sensor and electronic actuation system for sun shades is known from document EP 1077378 A1.

The object of the invention is to realise a weather sensor that will eliminate the above-mentioned drawbacks and that can be applied to a generic motor.

This object, and others that will be seen in the description that follows, are reached according to the invention with an apparatus for controlling the environment protection device that has the features set forth in claim 1. The apparatus mainly comprises at least one weather sensor whose suitably processed signal causes the movement of the environment protection device by means of at least one relay inside the said weather sensor.

The present invention is further explained below in one of its preferred embodiments that is shown purely by way of non-limiting example with reference to the attached table of drawings showing, in a schematic view, a control apparatus according to the invention.

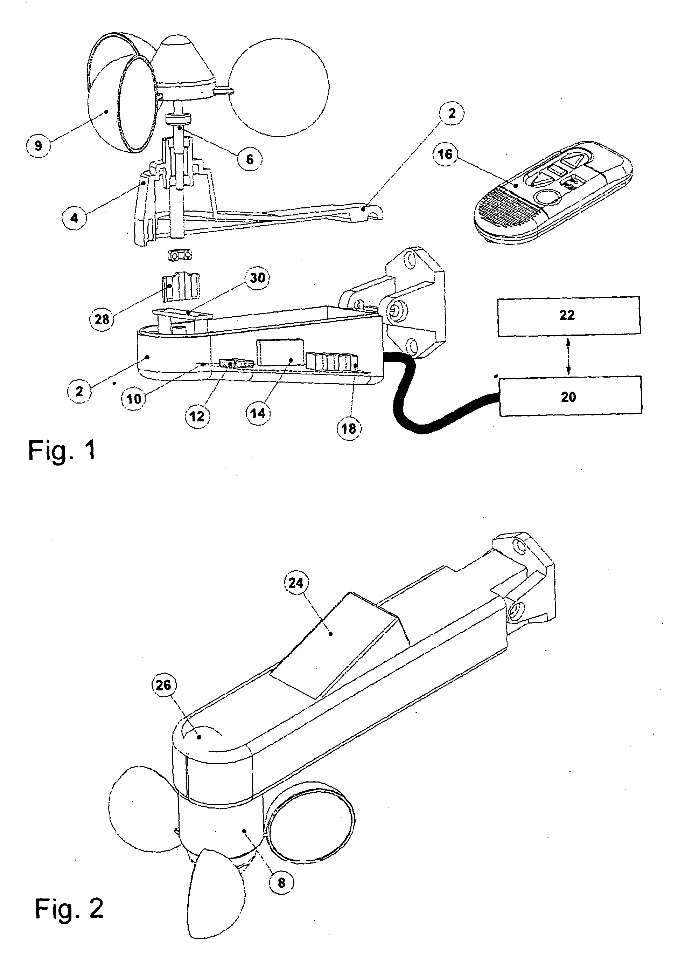

As can be seen from fig. 1, the apparatus for controlling environment protection devices comprises a box-shaped case (2) with an elongated shape having a cylindrical turret (4) in which is inserted the shaft (6) of an impeller with three semi-spherical blades (9) set at an angle of 120° to each other. The shaft of the impeller is inserted inside a cylindrical magnet (28) connected to a magnetic switch (30).

The outlets of the magnetic switch are connected to a control card (10) also located in the box-shaped case (2) which comprises a microprocessor (12) with memory of the intervention threshold values of the protection device, a receiver (14) associated with the microprocessor and in its turn tuned to a transmitter (16), at least one relay (18) to manage the motor (20) for operating the protection device (22) and a power supply device that in the present case uses alternating current.

The invention also envisages the use of a multi-function sensor (fig. 2) comprising a pluviometer (24), a lux meter (26) and a wind gauge (8).

The logic of the microprocessor is set in such a way that threshold values are assigned to it below which the microprocessor will not send any command to the motor to move the sunshade.

If then, when the sunshade is open, the wind speed and therefore the impeller speed exceeds the pre-set values, the signal generated by the magnets and processed by the electronic card activates the raising relay inside the wind gauge.

From what has been said, it will be clear that the apparatus for controlling environment protection devices has numerous advantages and in particular:
it allows quicker and safer installation,
it can be installed at a later date on generic motors that are already part of an apparatus,
it is less invasive since it is not fitted with a control card that is outside the sensor.

The present invention has been illustrated and described in one of its preferred embodiments, but it is understood that implementation variants can in practice be made to it without, however, departing from the protection objective of the present industrial invention patent.

## Claims

1. Apparatus for controlling environment protection devices, comprising sunshades, roller shutters and similar for performing the function of protecting a certain site, the apparatus comprising at least one weather sensor (8, 24, 26) housed in a casing (2), **characterized in that** it further comprises at least one relay (18) for controlling the protection device (22), said relay (18) being housed in said casing (2) that likewise houses said at least one weather sensor (8, 24, 26).

2. Apparatus as claimed in claim 1, **characterized in that** the weather sensor comprises a wind gauge (8).

3. Apparatus as claimed in claim 1, **characterized in that** the weather sensor comprises a lux meter (26).

4. Apparatus as claimed in claim 1, **characterized in that** the weather sensor comprises a pluviometer (24).

5. Apparatus for controlling environment protection devices as claimed in claim 1, **characterized in that** it comprises, inside said case (2), a control card (10) which comprises a microprocessor with memory of intervention threshold values of the protection device.

6. Apparatus as claimed in claim 1, **characterized in that** it comprises a transmitter (16) the intervention thresholds of the sensors being set by means of said transmitter (16).

7. Apparatus as claimed in claim 1, **characterized in that** it comprises regulators of the weather sensor (8, 24, 26) that are accessable without opening the casing (2) containing the at least one protection device control relay (18), the intervention thresholds being set by means of said regulators.

8. Apparatus for controlling environment protection devices as claimed in claim 1, **characterized in that** said at least one weather sensor is constituted by a multi-function sensor that comprises a pluviometer (24), a lux meter (26) and a wind gauge (8).

9. Apparatus for controlling environment protection devices as claimed in claim 8, **characterized in that** it comprises a receiver (14) associated with said microprocessor (12) that is tuned to said transmitter (16).

## Patentansprüche

1. Apparat zur Steuerung von Schutzvorrichtungen gegen Umwelteinflüsse, umfassend Sonnenschutzvorrichtungen, Rollverschlüsse und ähnliches für die Bewirkung der Schutzfunktion eines bestimmten Ortes, wobei der Apparat mindestens einen in einem Gehäuse (2) untergebrachten Wettersensor (8, 24, 26) umfasst, **dadurch gekennzeichnet, dass** er weiterhin mindestens ein Relais (18) für die Steuerung der Schutzvorrichtung (22) umfasst, wobei das Relais (18) in dem Gehäuse (2) untergebracht ist, in dem gleichfalls der mindestens eine Wettersensor (8, 24, 26) untergebracht ist.

2. Apparat nach Anspruch 1, **dadurch gekennzeichnet, dass** der Wettersensor einen Windstärkenmesser (8) umfasst.

3. Apparat nach Anspruch 1, **dadurch gekennzeichnet, dass** der Wettersensor einen Beleuchtungsmesser (26) umfasst.

4. Apparat nach Anspruch 1, **dadurch gekennzeichnet, dass** der Wettersensor einen Regenmesser (24) umfasst.

5. Apparat zur Steuerung von Schutzvorrichtungen gegen Umwelteinflüsse nach Anspruch 1, **dadurch gekennzeichnet, dass** er innerhalb des Gehäuses (2) eine Steuerkarte (10) umfasst, welche einen Mikroprozessor mit Speicher von Eingriffsschwellenwerten der Schutzvorrichtung umfasst.

6. Apparat nach Anspruch 1, **dadurch gekennzeichnet, dass** er einen Sender (16) umfasst, wobei die Eingriffsschwellen des Sensors mittels des Senders (16) gesetzt werden.

7. Apparat nach Anspruch 1, **dadurch gekennzeichnet, dass** er Regler des Wettersensors (8, 24, 26) umfasst, die ohne Öffnung des Gehäuses (2), das das mindestens eine Relais (18) für die Steuerung der Schutzvorrichtung enthält, zugänglich sind, wobei die Eingriffsschwellen mittels der Regler gesetzt werden.

8. Apparat zur Steuerung von Schutzvorrichtungen gegen Umwelteinflüsse nach Anspruch 1, **dadurch gekennzeichnet, dass** der mindestens eine Wettersensor durch einen Multifunktionssensor gebildet ist, der einen Regenmesser (24), einen Beleuchtungsmesser (26) und einen Windstärkenmesser (8) umfasst.

9. Apparat zur Steuerung von Schutzvorrichtungen gegen Umwelteinflüsse nach Anspruch 8, **dadurch gekennzeichnet, dass** er einen mit dem Mikroprozessor (12) verbundenen Empfänger (14) umfasst, der auf den Sender (16) abgestimmt ist.

## Revendications

1. Appareil pour commander des dispositifs de protection d'ambiance constitués par des parasols, des volets roulants et autres ayant pour fonction de protéger un certain lieu, l'appareil comportant au moins une station météorologique (8, 24, 26) logée dans un boîtier (2), **caractérisé en ce qu'**il comporte en outre au moins un relais (18) pour commander le dispositif de protection (22), ledit relais (18) étant logé dans ledit boîtier (2) qui contient également ladite/lesdites stations météorologiques (8, 24, 26).

2. Appareil selon la revendication 1, **caractérisé en ce que** la station météorologique comprend un anémomètre (8).

3. Appareil selon la revendication 1, **caractérisé en ce que** la station météorologique comprend un luxmètre (26).

4. Appareil selon la revendication 1, **caractérisé en ce que** la station météorologique comprend un pluviomètre (24).

5. Appareil pour commander des dispositifs de protection d'ambiance selon la revendication 1, **caractérisé en ce qu'**il comporte, l'intérieur dudit boîtier (2), une carte de commande (10) qui comprend un microprocesseur à mémoire de valeurs de seuils d'intervention du dispositif de protection.

6. Appareil selon la revendication 1, **caractérisé en ce qu'**il comporte un émetteur (16), les seuils d'intervention des capteurs étant établis l'aide dudit émetteur (16).

7. Appareil selon la revendication 1, **caractérisé en ce qu'**il comporte des régulateurs de la station météorologique (8, 24, 26) qui sont accessibles sans qu'il ne faille ouvrir le boîtier (2) contenant le/les relais de commande (18) de dispositif de protection, les seuils d'intervention étant établis à l'aide desdits régulateurs.

8. Appareil pour commander des dispositifs de protection d'ambiance selon la revendication 1, **caractérisé en ce que** ladite/lesdites stations météorologiques est/sont constituées par une station multifonction qui comprend un pluviomètre (24), un luxmètre (26) et un anémomètre (8).

9. Appareil pour commander des dispositifs de protection d'ambiance selon la revendication 8, **caractérisé en ce qu'**il comporte un récepteur (14) associé audit microprocesseur (12) qui est accordé avec ledit émetteur (16).
